# EUROPEAN PATENT SPECIFICATION

(11) **EP 3 817 098 B1**
(45) Date of publication and mention of the grant of the patent: **26.04.2023**
(21) Application number: 20172417.6
(22) Date of filing: 30.04.2020
(51) Int. Cl.: H01M 4/133, H01M 4/587, H01M 4/04, H01M 10/0525, H01M 4/02

(54) **NEGATIVE ELECTRODE FOR LITHIUM-ION BATTERY OF TERMINAL DEVICE**
NEGATIVELEKTRODE FÜR LITHIUM-IONEN-BATTERIE FÜR ENDGERÄTEVORRICHTUNG
ÉLECTRODE NÉGATIVE POUR BATTERIE LITHIUM-ION DE DISPOSITIF TERMINAL

(30) Priority: 29.10.2019 CN 201911039621
(43) Date of publication of application: 05.05.2021
(73) Proprietor: Beijing Xiaomi Mobile Software Co., Ltd., Beijing 100085 (CN)
(72) Inventor: HE, Zhiming, Beijing, 100085 (CN)
(74) Representative: Gevers Patents

(56) References cited:
- WO-A1-2019/164347
- CN-A- 108 258 193
- KR-A- 20170 031 452
- KR-A- 20170 084 798
- US-A1- 2018 287 145

## Description

### TECHNICAL FIELD

The disclosure relates to the technical field of terminal devices, and more particularly, to a negative electrode for a lithium-ion battery of a terminal device.

### BACKGROUND

As a terminal device tends to be miniaturized and on standby for a long time, a battery of the terminal device is generally of a high energy density. Taking a lithium-ion battery as an example, by increasing a capacity density of a negative electrode for the lithium-ion battery, an energy density of the lithium-ion battery can be increased, but a charging speed of the lithium-ion battery is reduced. That is to say, charging time is extended, which cannot meet user requirements. Based on this, it is very important to improve the capacity density of the negative electrode for the lithium-ion battery when the charging time is ensured, thereby improving the energy density of the lithium-ion battery.

Related technologies are known from CN108258193A, KR20170031452A and US2018287145A1.

### SUMMARY

The disclosure provides an improved negative electrode for a lithium-ion battery of a terminal device.

The features of the negative electrode for a lithium-ion battery and the manufacturing method thereof, the lithium-ion battery and the terminal device according to the present disclosure are defined in the independent claims, and the preferable features according to the present invention are defined in the dependent claims.

The negative electrode for the lithium-ion battery, the method for preparing the same, the lithium-ion battery and the terminal device in the embodiments of the disclosure have beneficial effects as follows.

In the negative electrode for the lithium-ion battery, the method for preparing the same, the lithium-ion battery and the terminal device in the embodiments of the disclosure, by coating the at least two graphite layers with different capacity densities on the current collector, an average capacity density of the negative electrode for the lithium-ion battery can be enabled to be greater than the lowest capacity density of the plurality of graphite layers when charging time of the lithium-ion battery is ensured, thereby improving the capacity density of the negative electrode for the lithium-ion battery, improving an energy density of the lithium-ion battery, and reducing the volume of the lithium-ion battery.

### BRIEF DESCRIPTION OF THE DRAWINGS

FIG. 1 is a structural diagram of a negative electrode for a lithium-ion battery in the conventional art.
FIG. 2 is a structural diagram of a negative electrode for a lithium-ion battery according to an embodiment of the disclosure.
FIG. 3 is a structural diagram of a negative electrode for a lithium-ion battery according to another embodiment of the disclosure.
FIG. 4 is a flow chart showing a method for preparing a negative electrode for a lithium-ion battery according to the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are for the purpose of describing specific embodiments only and are not intended to limit the disclosure. Unless otherwise defined, the technical terms or scientific terms used in the disclosure shall have the general meaning understood by those skilled in the art to which the disclosure belongs. "First", "second" and similar words used in the description and claims of the disclosure do not indicate any order, quantity or importance, but are only used to distinguish different components. Similarly, words such as "one" or "alan" do not indicate any quantity limitation, but the existence of at least one. Unless otherwise pointed out, words such as "comprise" or "include" mean that the components or objects appearing before "comprise" or "include" cover the components or objects listed after "comprise" or "include" and their equivalents, without excluding other components or objects. Words such as "connect" or "connected" are not limited to physical or mechanical connections, and may include electrical connections, whether direct or indirect.

The singular form "one", "said" and "the" used in the description and the appended claims of the disclosure are also intended to include the plural forms, unless otherwise the context clearly indicates other meanings. It should also be understood that the term "and/or" as used herein refers to and includes any or all possible combinations of one or more associated listed items.

As a terminal device tends to be miniaturized and required to be on standby for a long time, it is necessary to make a lithium-ion battery of the terminal device have a higher energy density. In other words, energy stored by the battery per unit volume need to increase higher and higher. The energy density of the lithium-ion battery can be increased by increasing a capacity density of the negative electrode for the lithium-ion battery. The capacity density refers to a capacity of the battery per unit volume, in mAh/cm³. The unit of the energy density is Wh/cm³. The energy density is obtained by multiplying the capacity density by voltage platform (energy density = capacity density * voltage platform), and the unit of the voltage platform is V. Generally, the negative electrode for the lithium-ion battery includes graphite layers. When the capacity density of the graphite layers increases, a charging rate of the lithium-ion battery decreases, that is, a charging speed decreases.

In order to solve the above problem, an embodiment of the disclosure provides a negative electrode for a lithium-ion battery, which includes a current collector and at least two graphite layers. The at least two graphite layers cover a surface of the current collector in a stacked manner, and capacity densities of the at least two graphite layers are different. In the negative electrode for the lithium-ion battery provided by the embodiment of the disclosure, by covering the current collector with the at least two graphite layers with different capacity densities in a stacked manner, an average capacity density of the negative electrode for the lithium-ion battery can be enabled to be greater than the lowest capacity density of the plurality of graphite layers, such as the capacity density of the graphite layer in the conventional art, when charging time is ensured, thereby improving the capacity density of the negative electrode for the lithium-ion battery, improving an energy density of the lithium-ion battery, and reducing the volume of the lithium-ion battery.

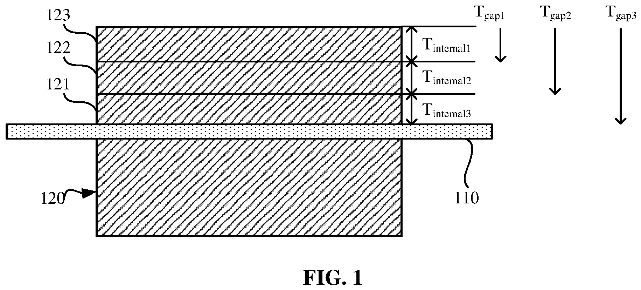

FIG. 1 is a structural diagram of a negative electrode for a lithium-ion battery in the conventional art. Referring to FIG. 1, the negative electrode for the lithium-ion battery includes a current collector 110 and a graphite layer 120 covering the current collector 110. The graphite layer 120 is a single-layer graphite layer, and the capacity density is low and is 450-630mAh/cm³.

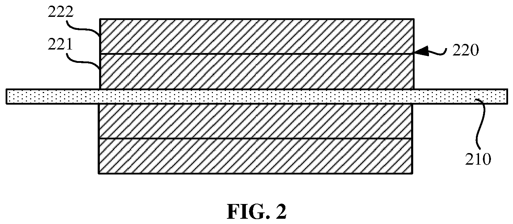

When the charging time of the negative electrode for the lithium-ion battery is the same as that in the conventional art, in order to improve the energy density of the negative electrode for the lithium-ion battery, an embodiment of the disclosure provides a negative electrode for a lithium-ion battery. FIG. 2 is a structural diagram of a negative electrode for a lithium-ion battery according to an embodiment of the disclosure. Referring to FIG. 2, the negative electrode for the lithium-ion battery includes a current collector 210 and at least two graphite layers 220. The at least two graphite layers 220 cover a surface of the current collector 210 in a stacked manner, and capacity densities of the at least two graphite layers 220 are different.

It should be noted that the capacity density in embodiments of the disclosure is a volume capacity density, and an energy density is a volume energy density. The lowest capacity density of the at least two graphite layers 220 may be the capacity density of the graphite layer 120 in the conventional art.

In the negative electrode for the lithium-ion battery in the embodiment of the disclosure, by covering the current collector 210 with at least two graphite layers 220 with different capacity densities in a stacked manner, an average capacity density of the negative electrode for the lithium-ion battery can be enabled to be greater than the lowest capacity density of the at least two graphite layers 220, i.e., the capacity density of the graphite layer 120 in the conventional art, when the charging time is ensured, thereby improving the capacity density of the negative electrode for the lithium-ion battery, improving an energy density of the lithium-ion battery, and reducing the volume of the lithium-ion battery.

In an embodiment, also referring to FIG. 2, the at least two graphite layers 220 include an innermost graphite layer 221 in contact with the current collector 210 and at least one non-innermost graphite layer 222 facing away from the current collector 210. A capacity density of the at least one non-innermost graphite layer 222 is greater than a capacity density of the innermost graphite layer 221. In an embodiment, the capacity density of the innermost graphite layer 221 is at the lowest level of the graphite layer, and the capacity density of the innermost graphite layer 221 ranges from 450 to 630mAh/cm³. For example, it may be 450mAh/cm³, 470mAh/cm³, 500mAh/cm³, 520mAh/cm³, 540mAh/cm³, 550mAh/cm³, 570mAh/cm³, 580mAh/cm³, 600mAh/cm³, 630mAh/cm³, and the like. In some embodiments, the capacity density of the innermost graphite layer 221 is equal to that of the graphite layer 120 in the conventional art, so that the capacity density of the negative electrode for the lithium-ion battery is greater than the value among 450-630mAh/cm³ when the charging time of the lithium-ion battery remains unchanged.

When the lithium-ion battery is charged, lithium ions are de-intercalated from a positive electrode, diffused to and intercalated in the position between the graphite layers 220 of the negative electrode. When all lithium ions are intercalated in the position between the graphite layers 220, the charging is completed, and spent time is the charging time of the lithium-ion battery. The "time for lithium ion intercalation" in embodiments of the disclosure refers to the time that the corresponding graphite layer 220 is completely intercalated with lithium ions in the lithium-ion battery, which may also be understood as the diffusion time of lithium ions in the graphite layers 220, or charging time of the graphite layers 220. The time for lithium ion intercalation in the graphite layers 220 includes: diffusion time T_{gap} of lithium ions in gaps between graphite particles plus diffusion time Tᵢₙₜₑᵣₙₐₗ of lithium ions in graphite particles.

The time for lithium ion intercalation in graphite layers will be further explained below.

Referring to FIG. 1, the graphite layer 120 is divided into an innermost graphite layer 121, a middle graphite layer 122 and an outermost graphite layer 123 in a direction far from the current collector 110. When lithium ions are diffused from the outside to the inside, the diffusion time of lithium ions in gaps between the graphite particles gradually increases, that is, diffusion time T_{gap1} of lithium ions in gaps between graphite particles of the outermost graphite layer 123 less than diffusion time T_{gap2} of lithium ions from an outer surface of the graphite layer 120 to gaps between graphite particles of the middle graphite layer 122 less than diffusion time T_{gap3} of lithium ions from the outer surface of the graphite layer 120 to gaps between graphite particles of the innermost graphite layer 121 (T_{gap1} < T_{gap2} < T_{gap3}). When the thicknesses of the innermost graphite layer 121, the middle graphite layer 122 and the outermost graphite layer 123 are identical, since the capacity densities of the three graphite layers are identical, diffusion time Tᵢₙₜₑᵣₙₐₗ₁ of lithium ions in graphite particles of the outermost graphite layer 123, diffusion time Tᵢₙₜₑᵣₙₐₗ₂ of lithium ions in graphite particles of the middle graphite layer 122 and diffusion time Tᵢₙₜₑᵣₙₐₗ₃ of lithium ions in graphite particles of the innermost graphite layer 121 are equal. Then, the charging time of the graphite layer 120 is the time for lithium ion intercalation in the last graphite layer, that is, the time Tᵢₙₜₑᵣₙₐₗ₃ for lithium ion intercalation in the innermost graphite layer 121 plus T_{gap3}.

In an embodiment, time for lithium ion intercalation in the non-innermost graphite layer 222 is less than or equal to time for lithium ion intercalation in the innermost graphite layer 221. In some embodiments, it is easy to ensure that the charging time of the lithium-ion battery is unchanged, and it improves the capacity density of the negative electrode for the lithium-ion battery. A specific explanation will be made below.

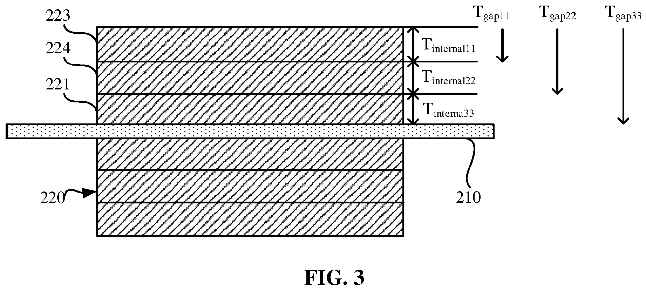

FIG. 3 is a structural diagram of a negative electrode for a lithium-ion battery according to another embodiment of the disclosure. Referring to FIG. 3, the graphite layers 220 include an outermost graphite layer 223, a middle graphite layer 224 and the innermost graphite layer 221. Since the radius of each lithium ion is at a nanometer scale and the size of gaps between graphite particles is at a micron scale, different compacted density and different particle sizes of graphite particles have little influence on the diffusion speed of lithium ions in gaps between graphite particles, which can be ignored. The diffusion time of lithium ions in gaps between the graphite particles gradually increases from the outside to the inside, that is, diffusion time T_{gap11} of lithium ions in gaps between graphite particles of the outermost graphite layer 223 less than diffusion time T_{gap22} of lithium ions from an outer surface of the graphite layer 220 to gaps between graphite particles of the middle graphite layer 224 less than diffusion time T_{gap33} of lithium ions from the outer surface of the graphite layer 220 to gaps between graphite particles of the innermost graphite layer 221 (T_{gap11}< T_{gap22}< T_{gap33}). When the total thickness of the graphite layer 220 in the embodiment is equal to the total thickness of the graphite layer 120 in the conventional art, the diffusion time T_{gap33} of lithium ions from the surface of the graphite layer 220 to gaps between graphite particles of the innermost graphite layer 221 is equal to the diffusion time T_{gap3} (T_{gap33}= T_{gap3}).

If an energy density of the outermost graphite layer 223 in FIG. 3 is greater than that of the middle graphite layer 224 or the innermost graphite layer 221, diffusion time of lithium ions in the outermost graphite layer 223 is slower, and diffusion time is the sum of Tᵢₙₜₑᵣₙₐₗ₁₁ and T_{gap11} which is greater than the sum of Tᵢₙₜₑᵣₙₐₗ₁ and T_{gap1} (Tᵢₙₜₑᵣₙₐₗ₁₁ + T_{gap11} > Tᵢₙₜₑᵣₙₐₗ₁ + T_{gap1}). When the total thickness of the graphite layers 220 in FIG. 3 is equal to that of the graphite layer 120 in FIG. 1, and when the thickness of the innermost graphite layer 221 is equal to that of the innermost graphite layer 121 in FIG. 1 and those capacity densities are also identical, diffusion time of lithium ions in the innermost graphite layer 221 is the sum of Tᵢₙₜₑᵣₙₐₗ₃₃ and T_{gap33} which is equal to the sum of Tᵢₙₜₑᵣₙₐₗ₃ and T_{gap3} (Tᵢₙₜₑᵣₙₐₗ₃₃ + T_{gap33} = Tᵢₙₜₑᵣₙₐₗ₃ + T_{gap3}). By making the sum of Tᵢₙₜₑᵣₙₐₗ₁₁ and T_{gap11} greater than the sum of Tᵢₙₜₑᵣₙₐₗ₁ and T_{gap1} and also less than or equal to the sum of Tᵢₙₜₑᵣₙₐₗ₃₃ and T_{gap33} which is equal to the sum of Tᵢₙₜₑᵣₙₐₗ₃ and T_{gap3} (Tᵢₙₜₑᵣₙₐₗ₁ + T_{gap1} < Tᵢₙₜₑᵣₙₐₗ₁₁ + T_{gap1}≤ Tᵢₙₜₑᵣₙₐₗ₃₃ + T_{gap33} = Tᵢₙₜₑᵣₙₐₗ₃ + T_{gap3}), the charging time of the lithium-ion battery with the negative electrode illustrated in FIG. 3 is the sum of Tᵢₙₜₑᵣₙₐₗ₃₃ and T_{gap33} (Tᵢₙₜₑᵣₙₐₗ₃₃ + T_{gap33}), so as to ensure that the charging time is unchanged. It should be noted that the relationship between the diffusion time (the sum of Tᵢₙₜₑᵣₙₐₗ₁₁ and T_{gap11}) of lithium ions in the outermost graphite layer 221 and the diffusion time (the sum of Tᵢₙₜₑᵣₙₐₗ₂₂ and T_{gap22}) of lithium ions in the middle graphite layer 224 is not limited, but it is necessary to meet requirements: the sum of Tᵢₙₜₑᵣₙₐₗ₁₁ and T_{gap11} is less than the sum of Tᵢₙₜₑᵣₙₐₗ₃₃ and T_{gap33} (Tᵢₙₜₑᵣₙₐₗ₁₁ + T_{gap11} < Tᵢₙₜₑᵣₙₐₗ₃₃ + T_{gap33}), and the sum of Tᵢₙₜₑᵣₙₐₗ₂₂ and T_{gap22} is less than the sum of Tᵢₙₜₑᵣₙₐₗ₃₃ and T_{gap33} (Tᵢₙₜₑᵣₙₐₗ₂₂ + T_{gap22} < Tᵢₙₜₑᵣₙₐₗ₃₃ + T_{gap33}), so as to ensure that the charging time is the sum of Tᵢₙₜₑᵣₙₐₗ₃₃ and T_{gap33} (Tᵢₙₜₑᵣₙₐₗ₃₃ + T_{gap33}).

In an embodiment, the thicknesses of the innermost graphite layer 221, the middle graphite layer 224 and the outermost graphite layer 223 are not necessarily equal, and the proportion of the three graphite layers needs to be balanced based on the charging time, so as to ensure that the charging time of the lithium-ion battery is unchanged.

In an embodiment, the capacity densities of the at least two graphite layers 220 gradually increase in a direction away from the current collector 210. In some embodiments, the charging time of the lithium-ion battery with the graphite layers 220 can be easily controlled, and the average capacity density of the negative electrode for the lithium-ion battery can be increased.

In an embodiment, at least one group of a capacity per gram, a compacted density, or a graphite particle median diameter of the at least two graphite layers 220 gradually increases in the direction away from the current collector 210, so that the capacity densities of the plurality of graphite layers 220 gradually increase in the direction away from the current collector 210. The capacity density is obtained by multiplying the capacity per gram by compacted density. The capacity per gram refers to the ratio of electric capacity released by active substances inside the battery to the mass of the active substances. The larger the gram capacity, the higher the capacity density of the graphite layers 220. The higher the compacted density, the higher the content of graphite per unit volume and the higher the capacity density of the graphite layers 220. The larger the median diameter of graphite particles, the larger the particle size of graphite particles, the more the lithium ions intercalated in the graphite particles, and the higher the capacity density of the graphite particles.

In an embodiment, the capacity per gram of each of the graphite layers 220 ranges from 300 to 365mAh/g. For example, it may be 300mAh/g, 310mAh/g, 320mAh/g, 330mAh/g, 340mAh/g, 350mAh/g, 360mAh/g, 365mAh/g, and the like. In some embodiments, by controlling the capacity per gram of each of the graphite layers 220, it is easy to enable the capacity densities of the plurality of graphite layers 220 to gradually increase in the direction away from the current collector 210.

In an embodiment, the compacted density of each of the graphite layers 220 ranges from 1.55 to 1.85g/cm³. For example, it may be 1.55g/cm³, 1.6g/cm³, 1.65g/cm³, 1.7g/cm³, 1.75g/cm³, 1.8g/cm³, 1.85g/cm³, and the like. In some embodiments, by controlling the compacted density of each of the graphite layers 220, it is easy to enable the capacity densities of the plurality of graphite layers 220 to gradually increase in the direction away from the current collector 210.

In an embodiment, the graphite particle median diameter of each of the graphite layers 220 ranges from 5 to 25µm. For example, it may be 5µm, 8µm, 10µm, 13µm, 15µm, 17µm, 20µm, 22µm, 25µm, and the like. In some embodiments, by controlling the graphite particle median diameter of each of the graphite layers 220, it is easy to enable the capacity densities of the graphite layers 220 to gradually increase in the direction away from the current collector 210.

In an embodiment, the thickness of each of the graphite layers 220 ranges from 1 to 80µm. For example, it may be 1µm, 7µm, 10µm, 17µm, 20µm, 25µm, 30µm, 35µm, 40µm, 45µm, 50µm, 55µm, 60µm, 65µm, 70µm, 75µm, 80µm, and the like. The surface density of each of the graphite layers 220 ranges from 0.001g/cm² to 0.3g/cm². For example, it may be 0.001g/cm², 0.01g/cm², 0.1g/cm², 0.15g/cm², 0.2g/cm², 0.25g/cm², 0.3g/cm², and the like. In some embodiments, by setting the thickness and surface density of each of the graphite layers 220, the graphite layers 220 can be conveniently prepared, and the negative electrode for the lithium-ion battery also has the good capacity density.

In an embodiment, the number of the graphite layers 220 is two, the capacity per gram of the innermost graphite layer 221 ranges from 300 to 360mAh/g, its compacted density ranges from 1.55 to 1.75g/cm³, its graphite particle median diameter ranges from 5 to 20µm, its thickness ranges from 1 to 80µm, and its surface density ranges from 0.001 to 0.015g/cm². The capacity per gram of the outermost graphite layer 223 ranges from 320 to 365mAh/g, its compacted density ranges from 1.60 to 1.85g/cm³, its graphite particle median diameter ranges from 10 to 25µm, its thickness ranges from 1 to 80µm, and its surface density ranges from 0.001 to 0.015g/cm². In some embodiments, the capacity per gram of the graphite layer of the negative electrode for the lithium-ion battery in the conventional art is 300-360mAh/g, its compacted density is 1.55-1.75g/cm³, and its graphite particle median diameter is 5-20µm, and its thickness is identical with that of the graphite layer 220 in embodiments of the disclosure. The average capacity density of the negative electrode for the lithium-ion battery in embodiments of the disclosure is 3%-5% greater than the capacity density of the negative electrode for the lithium-ion battery in the conventional art.

In an embodiment, the graphite layers 220 include the innermost graphite layer 221, a middle graphite layer 224 and the outermost graphite layer 223. The time for lithium ion intercalation in the outermost graphite layer 223 or the time for lithium ion intercalation in the middle graphite layer 224 is less than or equal to the time for lithium ion intercalation in the innermost graphite layer 221. The thickness ratio of the innermost graphite layer 221, the middle graphite layer 224 and the outermost graphite layer 223 needs to be balanced to ensure that the time for lithium ion intercalation in the graphite layers 220 is unchanged. In an embodiment, the capacity per gram of the innermost graphite layer 221 may range from 300 to 320mAh/g, its compacted density may range from 1.55 to 1.75g/cm³, its graphite particle median diameter may range from 5 to 15µm, its thickness may range from 1 to 80µm, and its surface density may range from 0.001 to 0.015g/cm². The capacity per gram of the middle graphite layer 224 may range from 320 to 345mAh/g, its compacted density may range from 1.60 to 1.80g/cm³, its graphite particle median diameter may range from 10 to 20µm, its thickness may range from 1 to 80µm, and its surface density may range from 0.02 to 0.035g/cm². The capacity per gram of the outermost graphite layer 223 may range from 340 to 365mAh/g, its compacted density may range from 1.65 to 1.85g/cm³, its graphite particle median diameter may range from 15 to 25µm, its thickness may range from 1 to 80µm, and its surface density may range from 0.04 to 0.095g/cm².

In an embodiment, the graphite layers 220 cover two opposite surfaces of the current collector 210, so as to improve the utilization rate of space.

In an embodiment, the graphite layers 220 include at least one of natural graphite, artificial graphite or modified graphite; and/or the current collector 210 includes a copper foil or aluminum foil.

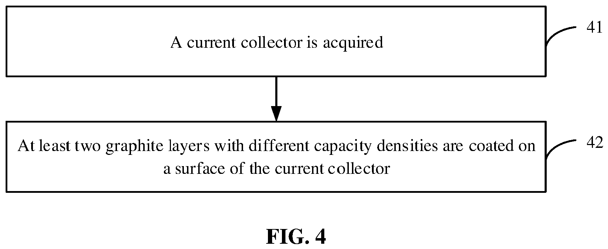

FIG. 4 is a flow chart showing a method for preparing a negative electrode for a lithium-ion battery according to the disclosure. The embodiment of the disclosure further provides a method for preparing any one of the negative electrodes for the lithium-ion battery mentioned above. Referring to FIG. 4, the method includes the following steps.

In step 41, a current collector 210 is acquired.

After the current collector 210 is acquired, the current collector 210 may be cleaned and polished. The current collector 210 may be a copper foil or aluminum foil.

In step 42, at least two graphite layers 220 with different capacity densities are coated on a surface of the current collector 210.

In an embodiment, when each of the graphite layers 220 is coated, graphite particles are mixed with a conductive agent and a binder to form slurry, which is then coated on the current collector 210. The conductive agent includes at least one of acetylene black, conductive carbon black, carbon fiber, carbon nanotube, Ketjen black or graphite conductive agent. The binder includes at least one of polyvinyl alcohol, polytetrafluoroethylene, polyolefin, polyvinylidene fluoride, styrene butadiene rubber, fluorinated rubber, polyurethane or hydroxymethyl cellulose salt.

In an embodiment, an innermost graphite layer 221 is coated on the surface of the current collector 210 by adopting a gravure coating process or extrusion coating process and is dried, and then other non-innermost graphite layers 222 are coated on a surface of the innermost graphite layer 221 by adopting the gravure coating process or extrusion coating process and are dried, until the multilayer graphite layers 220 are completely coated on the surface of the current collector 210.

An embodiment of the disclosure further provides a lithium-ion battery, which includes: a positive electrode, an electrolyte, and any one of the negative electrodes for the lithium-ion battery mentioned above. In some embodiments, an energy density of the lithium-ion battery is improved when charging time remains unchanged.

An embodiment of the disclosure further provides a method for preparing a lithium-ion battery. The method includes: performing processes such as cold pressing, slitting, winding or laminating, case welding, sealing, electrolyte injection, formation, sorting, assembly and the like to a negative electrode, a separator and a positive electrode for the lithium-ion battery which are stacked, so as to obtain the lithium-ion battery in the embodiments of the disclosure.

An embodiment of the disclosure further provides a terminal device, which includes: the lithium-ion battery mentioned above, a power switch, and a display. The terminal device may be a mobile phone, a digital broadcasting terminal, a message receiving and sending device, a game console, a tablet device, medical equipment, fitness equipment, a personal digital assistant, and the like.

For the method embodiment, since it basically corresponds to the device embodiment, reference may be made to the part of the description of the device embodiment for relevant points. The method embodiment and the device embodiment are complementary to each other.

The embodiments described above are just preferred embodiments of the disclosure and are not used to limit the disclosure.

## Claims

1. A negative electrode for a lithium-ion battery, **characterized in that** the negative electrode comprises:
a current collector (210); and
at least two graphite layers (220) with different capacity densities for covering a surface of the current collector (210) in a stacked manner;
wherein the at least two graphite layers (220) further comprise an innermost graphite layer (221) in contact with the current collector (210) and at least one non-innermost graphite layer (222) facing away from the current collector (210), and a capacity density of the at least one non-innermost graphite layer (222) is greater than a capacity density of the innermost graphite layer (221);
wherein the capacity densities of the at least two graphite layers (220) gradually increase in a direction away from the current collector (210);
wherein capacities per gram, compacted densities and graphite particle median diameters of the at least two graphite layers (220) gradually increase in the direction away from the current collector (210).

2. The negative electrode for the lithium-ion battery of claim 1, wherein the capacity per gram of each of the graphite layers ranges from 300 to 365mAh/g;
the compacted density of each of the graphite layers ranges from 1.55 to 1.85g/cm³; and/or
the graphite particle median diameter of each of the graphite layers ranges from 5 to 25µm.

3. The negative electrode for the lithium-ion battery of claim 1, wherein the capacity density of the innermost graphite layer (221) is at a lowest level of the graphite layer, and the capacity density of the innermost graphite layer (221) ranges from 450 to 630mAh/cm³.

4. The negative electrode for the lithium-ion battery of claim 1, wherein time for lithium ion intercalation in the non-innermost graphite layer (222) is less than or equal to time for lithium ion intercalation in the innermost graphite layer (221).

5. The negative electrode for the lithium-ion battery of claim 1, wherein a thickness of each of the graphite layers ranges from 1 to 80µm; and/or
a surface density of each of the graphite layers ranges from 0.001g/cm² to 0.3g/cm².

6. A method for manufacturing the negative electrode of any one of claims 1 to 5, **characterized in that** the method comprises:
acquiring (41) a current collector; and
coating (42) at least two graphite layers with different capacity densities on a surface of the current collector.

7. A lithium-ion battery, **characterized in that** the lithium-ion battery comprises:
the negative electrode of any one of claims 1 to 5;
a positive electrode; and
an electrolyte.

8. A terminal device, **characterized in that** the terminal device comprises the lithium-ion battery of claim 7, a power switch, and a display.

## Patentansprüche

1. Eine Negativelektrode für eine Lithium-Ionen-Batterie, **dadurch gekennzeichnet, dass** die Negativelektrode umfasst:
einen Stromabnehmer (210); und
mindestens zwei Grafitlagen (220) mit unterschiedlichen Kapazitätsdichten zum Abdecken einer Oberfläche des Stromabnehmers (210) auf eine gestapelte Weise;
wobei die mindestens zwei Grafitlagen (220) weiter eine innerste Grafitlage (221) in Kontakt mit dem Stromabnehmer (210) und mindestens eine nicht innerste Grafitlage (222), die von dem Stromabnehmer (210) weg zeigt, umfassen, und eine Kapazitätsdichte der mindestens einen nicht innersten Grafitlage (222) größer ist als eine Kapazitätsdichte der innersten Grafitlage (221);
wobei die Kapazitätsdichten der mindestens zwei Grafitlagen (220) in eine Richtung von dem Stromabnehmer (210) weg schrittwiese zunehmen;
wobei Kapazitäten je Gramm, verdichteten Dichten und Grafitpartikelmediandurchmesser der mindestens zwei Grafitlagen (220) in eine Richtung von dem Stromabnehmer (210) weg schrittwiese zunehmen.

2. Die Negativelektrode für die Lithium-Ionen-Batterie nach Anspruch 1, wobei die Kapazität je Gramm von jeder der Grafitlagen im Bereich von 300 bis 365 mAh/g liegt;
die verdichtete Dichte von jeder der Grafitlagen im Bereich von 1,55 bis 1,85 g/cm³ liegt; und/oder
der Grafitpartikelmediandurchmesser von jeder der Grafitlagen im Bereich von 5 bis 25 µm liegt.

3. Die Negativelektrode für die Lithium-Ionen-Batterie nach Anspruch 1, wobei die Kapazitätsdichte der innersten Grafitlage (221) auf einer niedrigsten Ebene der Grafitlage ist und die Kapazitätsdichte der innersten Grafitlage (221) im Bereich von 450 bis 630 mAh/cm³ liegt.

4. Die Negativelektrode für die Lithium-Ionen-Batterie nach Anspruch 1, wobei die Zeit für Lithium-Ionen-Interkalation in der nicht innersten Grafitlage (222) weniger oder gleich der Zeit für Lithium-Ionen-Interkalation in der innersten Grafitlage (221) ist.

5. Die Negativelektrode für die Lithium-Ionen-Batterie nach Anspruch 1, wobei eine Dicke von jeder der Grafitlagen im Bereich von 1 bis 80 µm liegt; und/oder
eine Oberflächendichte von jeder der Grafitlagen im Bereich von 0,001 g/cm² bis 0,3 g/cm² liegt.

6. Ein Verfahren zum Herstellen der Negativelektrode nach einem der Ansprüche 1 bis 5, **dadurch gekennzeichnet, dass** das Verfahren umfasst:
Erwerben (41) eines Stromabnehmers; und
Auftragen (42) von mindestens zwei Grafitlagen mit unterschiedlichen Kapazitätsdichten auf einer Oberfläche des Stromabnehmers.

7. Eine Lithium-Ionen-Batterie, **dadurch gekennzeichnet, dass** die Lithium-Ionen-Batterie umfasst:
die Negativelektrode nach einem der Ansprüche 1 bis 5;
eine Positivelektrode; und
einen Elektrolyt.

8. Eine Endgerätvorrichtung, **dadurch gekennzeichnet, dass** die Endgerätvorrichtung die Lithium-Ionen-Batterie nach Anspruch 7, einen Ein-Ausschalter und eine Anzeige umfasst.

## Revendications

1. Une électrode négative pour une batterie au lithium-ion, **caractérisée en ce que** l'électrode négative comprend :
un collecteur de courant (210) ; et
au moins deux couches de graphite (220) de différentes densités de capacité destinées à recouvrir une surface du collecteur de courant (210) de manière empilée ;
dans laquelle les au moins deux couches de graphite (220) comprennent en outre une couche de graphite interne (221) en contact avec le collecteur de courant (210) et au moins une couche de graphite non interne (222) orientée à l'opposé du collecteur de courant (210), et une densité de capacité de la au moins une couche de graphite non interne (222) est supérieure à une densité de capacité de la couche de graphite interne (221) ;
dans laquelle les densités de capacité des au moins deux couches de graphite (220) augmentent progressivement dans une direction s'éloignant du collecteur de courant (210) ;
dans laquelle des capacités par gramme, des densités compactées et des diamètres médians des particules de graphite des au moins deux couches de graphite (220) augmentent progressivement dans la direction s'éloignant du collecteur de courant (210).

2. L'électrode négative pour la batterie au lithium-ion selon la revendication 1, dans laquelle la capacité par gramme de chacune des couches de graphite va de 300 à 365 mAh/g ;
la densité compactée de chacune des couches de graphite va de 1,55 à 1,85 g/cm³ ; et/ou
le diamètre médian des particules de graphite de chacune des couches de graphite va de 5 à 25 µm.

3. L'électrode négative pour la batterie au lithium-ion selon la revendication 1, dans laquelle la densité de capacité de la couche de graphite interne (221) est au niveau le plus bas de la couche de graphite, et la densité de capacité de la couche de graphite interne (221) va de 450 à 630 mAh/cm³.

4. L'électrode négative pour la batterie au lithium-ion selon la revendication 1, dans laquelle le temps pour l'intercalation des ions lithium dans la couche de graphite non interne (222) est inférieur ou égal au temps pour l'intercalation des ions lithium dans la couche de graphite interne (221).

5. L'électrode négative pour la batterie au lithium-ion selon la revendication 1, dans laquelle une épaisseur de chacune des couches de graphite va de 1 à 80 µm ; et/ou
une densité de surface de chacune des couches de graphite va de 0,001 g/cm² à 0,3 g/cm².

6. Un procédé de fabrication de l'électrode négative selon l'une quelconque des revendications 1 à 5, **caractérisé en ce que** le procédé comprend :
l'acquisition (41) d'un collecteur de courant ; et
l'application (42) d'au moins deux couches de graphite de différentes densités de capacité sur une surface du collecteur de courant.

7. Une batterie au lithium-ion, **caractérisée en ce que** la batterie au lithium-ion comprend :
l'électrode négative selon l'une quelconque des revendications 1 à 5 ;
une électrode positive ; et
un électrolyte.

8. Un dispositif terminal, **caractérisé en ce que** le dispositif terminal comprend la batterie au lithium-ion selon la revendication 7, un interrupteur, et un écran.
